# EUROPÄISCHE PATENTANMELDUNG

(11) **EP 1 356 881 A1**
(43) Veröffentlichungstag der Anmeldung: **29.10.2003**
(21) Anmeldenummer: 02009501.4
(22) Anmeldetag: 25.04.2002
(51) Int. Cl.: B22F 1/00, H01M 4/42

(54) **Zinkpulver oder Zinklegierungspulver für alkalische Batterien**

(71) Anmelder: Grillo-Werke AG, D-47169 Duisburg (DE)
(72) Erfinder: Melzer, Armin, Dr., 46535 Dinslaken (DE); Spriestersbach, Jochen, Dr., 47058 Duisburg (DE); Kube, Rudi, 38667 Harzburg (DE); Merkel, Petra, 38667 Bad Harzburg (DE); Schulz, Norbert, 38667 Bad Harzburg (DE)
(74) Vertreter: Sternagel, Fleischer, Godemeyer & Partner Patentanwälte

(57) **Zusammenfassung**

Gegenstand der Erfindung ist ein Zinkpulver oder Zinklegierungspulver für alkalische Batterien, das eine Korngrößenverteilung aufweist, bei der 60 bis 100 Gew.- % der Teilchen bezogen auf das Zinkpulver oder Zinklegierungspulver einen Durchmesser von 40 bis 140 µm besitzen. Ein weiterer Gegenstand der Erfindung ist eine alkalische Batterie.

## Beschreibung

Gegenstand der Erfindung ist ein Zinkpulver oder Zinklegierungspulver für alkalische Batterien mit einer spezifischen Korngrößenverteilung sowie eine alkalische Batterie, in der die erfindungsgemäßen Zinkpulver oder Zinklegierungspulver als Elektrode eingesetzt werden.

Im Stand der Technik werden eine Vielzahl von verschieden legierten Zinkpulvern für den Einsatz in alkalischen Batterien beschrieben. Dabei werden die Zinkpulver in unterschiedlicher Weise legiert. Üblicherweise werden Zinkpulver eingesetzt, die frei von Quecksilber, Cadmium und möglichst auch frei von Blei sind. Derartige Zinkpulver haben den Nachteil, dass sie sich bei Einsatz in alkalischen Batterien aufgrund verschiedener Reaktionsprozesse unter Gasentwicklung allmählich zersetzen und so die Haltbarkeit, Lagerfähigkeit und auch die elektrischen Eigenschaften der Batterie negativ beeinflussen. Um dies zu verhindern hat man für Batteriezwecke meist Legierungen von Zinkpulver mit geringen Mengen anderer Metalle eingesetzt. Als Legierungselemente, die die Batteriegasung verringern, werden im Stand der Technik im wesentlichen Indium, Bismut, Aluminium, Magnesium und Calcium aufgeführt. Das Ziel dieser Zulegierungen ist es, beim Einsatz in Batterien eine möglichst geringe Batteriegasung zu erhalten und damit die Lagerfähigkeit wie auch die Anwendungssicherheit der Batterien zu erhöhen.

Die technischen Anforderungen an Batterien haben sich in den letzten Jahren jedoch erheblich erhöht. Insbesondere durch eine erhebliche Zunahme von mobilen Geräten im Bereich der digitalen Kommunikations- und Unterhaltungselektronik, wie Digitalvideokameras, Mobiltelefonen, CD-Player, MP-3 Player, Laptops etc. sind die Anforderungen an Batterien und ihre elektrischen Leistungen erheblich gestiegen. Dies hat dazu geführt, dass man nunmehr versucht, die elektrischen Eigenschaften nicht mehr nur auf legierungstechnischem Wege zu verbessern, sondern durch spezielle Pulververteilungen, Partikelformen und Schüttdichten des verwendeten Zinkpulvers oder Zinklegierungspulver zu erreichen. Üblicherweise werden heute gemäß dem Stand der Technik Zinkpulver oder Zinklegierungspulver verwendet, deren Teilchengröße in einem breiten Bereich von etwa 32 bis 500 µm liegt, wobei die Korngrößen unbestimmt verteilt sind.

So beschreibt die WO 00/74157 A1 ein Gemisch aus Zinkpulver oder Zinklegierungspulver und einem flüssigen elektrolytischen Medium, wobei das Volumen des Mediums in etwa den Zwischenräumen zwischen den Teilchen bei trockener Schüttung entspricht. Diese Teilchen besitzen eine Schüttdichte die kleiner als 2,8 g/cm³ ist. Mit dieser Entwicklung soll erreicht werden, dass ein direkter Kontakt zwischen nahezu allen Teilchen besteht aber dennoch genügend flüssiges elektrolytisches Medium vorhanden ist, um die Metall und/oder Legierungsteilchen aufzulösen und dabei Strom zu erzeugen.

Die WO 01/03209 A1 beschreibt in ähnlicher Weise ein Gemisch aus Zink- oder Zinklegierungsteilchen und einem flüssigen elektrolytischen Medium, wobei hier die Schüttdichte noch geringer ist und bei etwa 2,3 g/cm³ liegt. Weiterhin werden Metall- oder Metalllegierungsteilchen eingesetzt, die ungleichmäßig geformt sind und einer ungleichmäßige Oberfläche aufweisen.

WO 99/07030 A1 beschreibt Zinkpulver oder Zinklegierungspulver für die Anwendung bei alkalischen Batterien, wobei dem Zink oder den Zinklegierungen unterschiedliche Mengen von feinsten Teilchen einer Größe von 200 mesh oder weniger (entsprechend ≤ 74 µm Partikeldurchmesser) zugemischt werden. Es wurde gefunden, dass diese Zumischung von feinen Zinkpartikeln zu besseren elektrischen Eigenschaften der Batterie führt, insbesondere zu einer Verbesserung der maximalen Entladungsrate. Diese definiert die Zeit, in der eine elektrische Spannung aus einer Batterie unter Belastung entnommen werden kann, ohne dass die Batteriespannung unter einen bestimmten Wert fällt. Diese Größe ist insbesondere wichtig für die Anwendung im Hochstrombereich, insbesondere bei Mobiltelefonen und anderen elektronischen Produkten. Diese messen üblicherweise die Batteriespannung und melden dem Benutzer wenn die Spannung bei Belastung abfällt. Dies kann jedoch häufig dazu führen, dass die Batterien trotz noch ausreichend vorhandener Kapazität frühzeitig und unnötigerweise ausgetauscht werden.

Die Anforderungen an Zinkpulver und Zinklegierungspulver für die Anwendung in elektrischen Batterien sind sehr unterschiedlich und es ist bis heute nicht gelungen, ein Zinkpulver oder ein Zinklegierungspulver zu entwickeln, das in allen Testverfahren eine Verbesserung erzielen konnte und insbesondere eine geringe Batteriegasung aufweist. Dies zeigt sich beispielsweise auch an der oben beschriebenen WO 99/07030. In den dort beschriebenen Beispielen wird die Batteriegasung der für Hochstromanwendungen geeigneten Zinkpulver und Zinklegierungspulver nicht untersucht und es ist davon auszugehen, dass die Batteriegasungseigenschaften nicht optimal sind.

Die technische Aufgabe der Erfindung war es daher, ein Zinkpulver oder ein Zinklegierungspulver zur Verfügung zu stellen, das für die Anwendung in alkalischen Batterien hervorragende elektrische Eigenschaften besitzt und insbesondere auch eine geringere Batteriegasung aufweist.

Diese Aufgabe wird gelöst durch ein Zinkpulver oder ein Zinklegierungspulver für alkalische Batterien, das eine Korngrößenverteilung aufweist, bei der 60 bis 100 Gew.-% der Teilchen bezogen auf das Zinkpulver oder Zinklegierungspulver einen Partikeldurchmesser von 40 bis 140 µm besitzen. In einer bevorzugten Ausführungsform ist die Korngrößenverteilung so, dass 75 bis 95 Gew.-% der Teilchen bezogen auf das Zinkpulver oder Zinklegierungspulver einen Durchmesser von 40 bis 140 µm besitzen. Die Korngrößenverteilung wurde nach ASTM B 214 ermittelt.

Es ist weiterhin bevorzugt, dass das erfindungsgemäße Zinkpulver oder Zinklegierungspulver eine Schüttdichte in einem Bereich von 2,9 bis 4,5 g/cm³, vorzugsweise von 3,2 bis 4,0 g/cm³ besitzt. Die Schüttdichte wurde nach ASTM B 212 ermittelt.

In einer weiteren bevorzugten Ausführungsform besitzt das erfindungsgemäße Zinkpulver oder Zinklegierungspulver einen Anteil von Teilchen mit einem Durchmesser < 40 µm unter 10 Gew.-%, vorzugsweise unter 5 Gew.-% und ganz besonders bevorzugt unter 4 Gew.-% bezogen auf das Zinkpulver oder Zinklegierungspulver. Es ist weiterhin bevorzugt, dass die Teilchen eines Durchmessers bis 100 µm des Zinkpulvers oder Zinklegierungspulvers eine kugelförmige Partikelform aufweisen. Die kugelförmige Partikelform nimmt herstellungsbedingt mit abnehmender Partikelgröße zu, d.h. Partikel kleiner 100 µm, vorzugsweise < 71 µm, zeichnen sich durch eine fast sphärische Partikelform aus. Diese spezielle Partikelform ist mit ein Grund für die sehr guten Gasungseigenschaften des erfindungsgemäßen Zinkpulvers oder Zinklegierungspulvers.

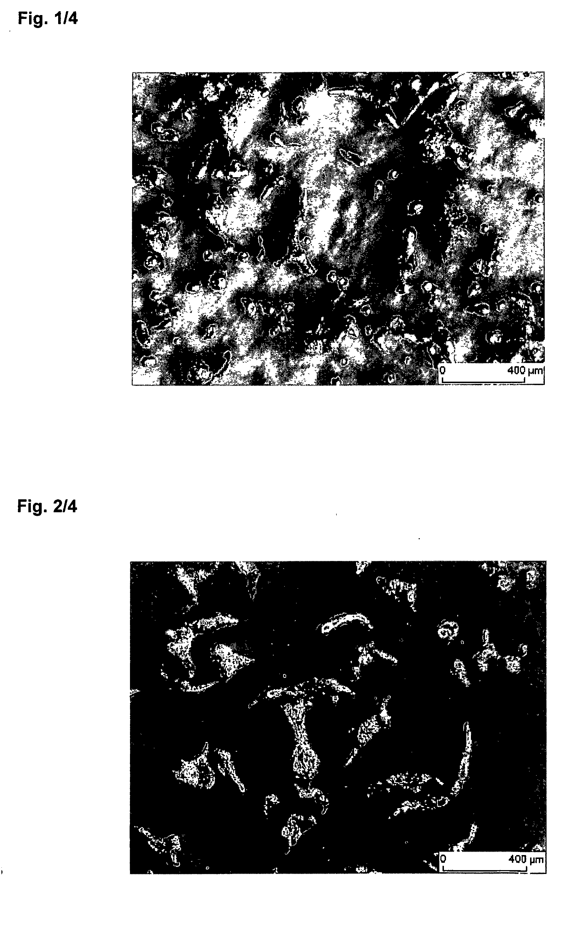

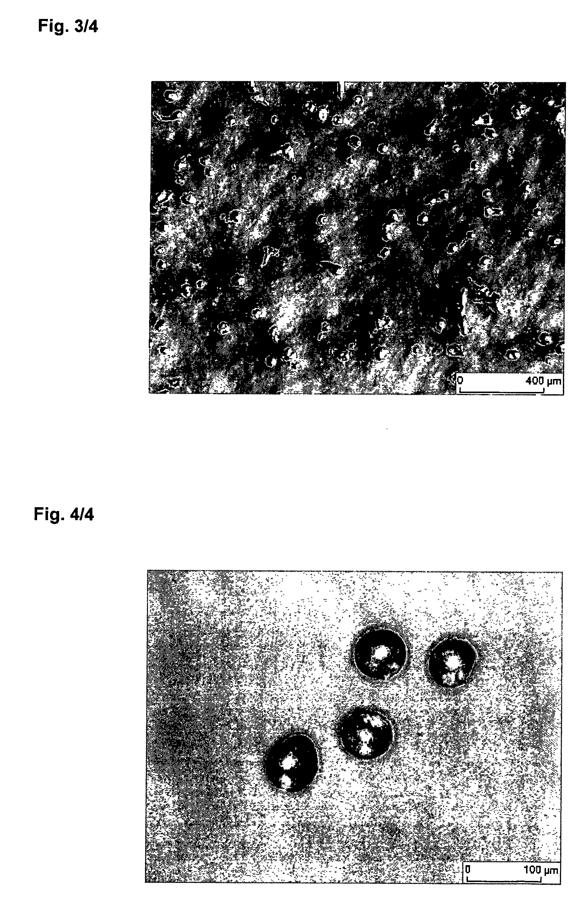

Die nachfolgenden Figuren sollen die Größe und Form der Zinkpartikel näher erläutern. Die Figuren 1 bis 4 zeigen elektronenmikroskopische Aufnahmen von ungesiebtem Zinklegierungspulver nach der Herstellung im Originalzustand.

In Figur 1 ist das erfindungsgemäße Zinkpulver beispielhaft in der gesamten Verteilung dargestellt, ohne Bezug zur reellen quantitativen Verteilung.

In Figur 2 ist die Fraktion > 71 µm des erfindungsgemäßen Zinkpulvers dargestellt, ohne Bezug zur reellen quantitativen Verteilung, die sich durch eine relativ spratzige Partikelform auszeichnet.

In Figur 3 ist die Fraktion < 71 µm des erfindungsgemäßen Zinkpulvers dargestellt, ohne Bezug zur reellen quantitativen Verteilung, die sich durch eine sehr kugelige Partikelform auszeichnet.

In Figur 4 sind einzelne kugelförmige Partikel der Fraktion < 71 µm des erfindungsgemäßen Zinkpulvers dargestellt, ohne Bezug zur reellen quantitativen Verteilung.

In einer besonders bevorzugten Ausführungsform besitzt das erfindungsgemäße Zinkpulver oder Zinklegierungspulver die folgenden Korngrößenverteilung, wobei alle Angaben auf die Gesamtmenge an Zinkpulver und Zinklegierungspulver bezogen sind.

| | |
|---|---|
| 0 - 10 Gew.-% | < 40 µm |
| 15 - 40 Gew.-% | 40 bis 71 µm |
| 24 - 40 Gew.-% | 71 bis 100 µm |
| 10 - 40 Gew.-% | 100 bis 140 µm |
| 0 - 20 Gew.-% | > 140 µm. |

Bei diesen Ausführungsformen beträgt die Schüttdichte in ganz besonders bevorzugter Ausführung 3,2 bis 4,0 g/cm³.

Als Korngrößenverteilung im Sinne der Erfindung wird die Verteilung der Teilchengröße im Zinkpulver oder Zinklegierungspulver verstanden, wobei die Größe der Teilchen als Durchmesser in µm angegeben wird. Die Korngrößenverteilung wurde nach ASTM B 214 ermittelt. Unter Schüttdichte im Sinne der Erfindung wird der Quotient aus Masse und eingenommenem Volumen, das Zwischenräume und falls zusätzlich Hohlräume vorhanden sind, auch diese einschließt, verstanden Diese Schüttdichte wird gemessen nach ASTM B 212.

Soweit in der Erfindung von Zinkpulver oder Zinklegierungspulver gesprochen wird, werden hierfür Zinksorten verwendet, die bezüglich ihrer Reinheit für Batterieanwendungen gemäß dem Stand der Technik geeignet sind. Übliche verwendete Zinksorten besitzen eine Reinheit von 99,99 %, 99,995 % oder 99,999 %. Legierungsangaben, die in der Anmeldung gemacht werden, beziehen sich auf den Anteil an zulegierten Elementen, also nicht auf eventuell im Zinkpulver vorhandene Verunreinigungen. Die Mengenangaben bei den Zinklegierungen sind so zu verstehen, dass die jeweilige Menge an Legierungselement zulegiert wird und der Rest Zink ist.

Das erfindungsgemäße Zinkpulver oder Zinklegierungspulver besitzt eine spezifische Korngrößenverteilung, die in einem für Batteriepulver sehr engen Bereich liegt. Es verfügt über hervorragende elektrische Eigenschaften, insbesondere bei der Anwendung in alkalischen Batterien. Die Batteriegasung ist im Vergleich zu herkömmlichen Zinkpulvern des Standes der Technik etwa um den Faktor 2 bis 20 niedriger. Daraus resultiert eine erheblich längere Haltbarkeit und Lagerfähigkeit von alkalischen Batterien, in denen die erfindungsgemäßen Zinkpulver oder Zinklegierungspulver eingesetzt werden.

Das Zinkpulver unterliegt legierungstechnisch keinerlei Einschränkungen und so können für Zinkpulver Legierungselemente Indium, Bismut, Blei, Aluminium, Calcium, Lithium, Natrium und Magnesium oder Gemische derselben als Legierungselemente eingesetzt werden. In bevorzugter Weise sind ein oder mehrere Legierungselemente in folgenden Mengen enthalten: Indium 0,1 bis 1200 ppm, Bismut 0,1 bis 1000 ppm, Blei 0,1 bis 1000 ppm, Aluminium 0,1 bis 200 ppm, Calcium 0,1 bis 200 ppm, Lithium 0,1 bis 200 ppm, 0,1 bis 200 ppm Natrium, Magnesium 0,1 bis 200 ppm.

Besonders bevorzugt sind die folgenden Legierungen: a) 0,1 bis 1200 ppm Indium, vorzugsweise 100 bis 850 ppm Indium und 0,1 bis 1000 ppm Bismut, vorzugsweise 50 bis 500 ppm Bismut.

Weiterhin bevorzugt ist die Legierung b) mit 0,1 bis 1200 ppm Indium, vorzugsweise 100 bis 500 ppm Indium, und 0,1 bis 1000 ppm Bismut, vorzugsweise 50 bis 500 ppm Bismut und 0,1 bis 1000 ppm Blei, vorzugsweise 400 bis 600 ppm Blei.

Weiterhin besonders bevorzugt ist die Legierung c) mit 0,1 bis 1000 ppm Blei, vorzugsweise 400 bis 600 ppm Blei und 0,1 bis 1000 ppm Indium, vorzugsweise 100 bis 850 ppm Indium.

Als weitere Legierung ist eine Legierung d) bevorzugt, die 0,1 bis 1000 ppm Blei, insbesondere 400 bis 600 ppm Blei enthält.

Die Legierungen a) bis d) können in besonders bevorzugter Ausführungsform geringe Mengen an Alkalimetallen, insbesondere 0,1 bis 200 ppm Lithium und/oder 0,1 bis 200 ppm Natrium enthalten.

Bei den oben angegebenen Legierungsangaben ist der Rest Zink.

Untersuchungen haben gezeigt, dass die Zulegierung dieser obengenannten Elemente keinerlei Nachteile bezüglich der elektrischen Eigenschaften oder der Batteriegasungseigenschaften verursacht. Das erfindungsgemäße Zinkpulver kann sogar als bleifreies Pulver für alle Anwendungen und Batterietypen verwendet werden. Batterieversuche mit dem Zinkpulver oder Zinklegierungspulver auch ohne Verwendung von Blei als Legierungselement haben gezeigt, dass insbesondere in den alkalischen Rundzellentypen die Gasung extrem niedrig ist und dies ebenso zutrifft für Zelltypen der Größen C und D der internationalen Klassifikation.

Das Zinkpulver ist damit geeignet für die Anwendung in allen alkalischen Rundzellen des internationalen Typs AAAA, AAA, AA, C, D etc. sowie für alle Typen von Knopfzellen, in denen Zinkpulver oder Zinklegierungspulver eingesetzt werden. Hierzu gehören zum Beispiel Zink-Luft-Knopfzellen, Alkali-Mangan-Knopfzellen und Zink-Silberoxid-Knopfzellen. Bei der Anwendung in Knopfzellen wird häufig noch amalgamiertes Zinkpulver eingesetzt, das Quecksilber in Mengen von etwa 0,15 bis 7 Gew.-% enthält. Falls diese Amalgamierung gewünscht wird, kann das erfindungsgemäße Zinkpulver oder Zinklegierungspulver einer zusätzlichen Oberflächenamalgamierung unterzogen werden. Es kann jedoch aufgrund seiner geringen Gasung auch ohne Quecksilberzusatz eingesetzt werden, wobei dann der Quecksilbergehalt unter 1 ppm liegt.

In einer bevorzugten Ausführungsform ist es weiterhin möglich, das erfindungsgemäße Zinkpulver oder Zinklegierungspulver mit anderen herkömmlichen Zinkpulvern oder Zinklegierungspulver des Standes der Technik zu kombinieren und so Doppelverteilungen zu erstellen. Diese Doppelverteilungen führen zu sehr guten Hochstromeigenschaften in der Batterie. Dabei sollte das zweite Zinkpulver eine Korngrößenverteilung aufweisen, wie es bei für Batterien gängigen Pulvern oder Zinklegierungspulvern der Fall ist.

Üblicherweise werden heute gemäß dem Stand der Technik Zinkpulver oder Zinklegierungspulver verwendet, deren Teilchengröße in einem breiten Bereich von etwa 32 bis 500 µm liegt. In bevorzugter Weise sollte diese Korngrößenverteilung des erfindungsgemäßen Zinkpulvers oder Zinklegierungspulvers gemessen nach ASTM B 214 in einem Bereich von 75 bis 500 µm liegen.

Da das erfindungsgemäße Zinkpulver einen für feine Pulvertypen sehr geringen Feinanteil von Teilchen mit einem Durchmesser < 40 µm besitzt, liegt hier ein erheblicher Vorteil gegenüber Zinkpulvern oder Zinklegierungspulvern gemäß dem Stand der Technik, die in der Regel einen weitaus höheren Feinanteil von < 40 µm aufweisen. Es wurde festgestellt, dass gerade dieser erhöhte Feinanteil zu einer höheren Batteriegasung führt. Insbesondere im Gemisch mit dem erfindungsgemäßen Zinkpulver oder Zinklegierungspulver tritt jedoch keine Erhöhung der Batteriegasung ein. Somit besteht keinerlei Einschränkung in den Mischungsverhältnissen dieser Zinkpulver oder Zinklegierungspulver. Das Mischungsverhältnis kann in Abhängigkeit zu den erwünschten Batterieeigenschaften gezielt eingestellt werden.

Eine positive Wirkung in den Batterieeigenschaften bei Einsatz des erfindungsgemäßen Zinkpulvers kann bereits bei Zugabe von 5 Gew.-% des erfindungsgemäßen Zinkpulvers eindeutig nachgewiesen werden.

Die Herstellung des erfindungsgemäßen Zinkpulvers oder Zinklegierungspulvers erfolgt in an sich bekannter Weise. Die Teilchen aus Zink oder Zinklegierungen werden nach verschiedenen Methoden aus flüssigem Zink oder flüssigen Zinklegierungen hergestellt. Beispielsweise erfolgt ein Verdüsen oder Granulieren auf einem rotierenden Granulierteller, wobei sich je nach Verfahrensbedingungen Korngrößen, Korngrößenverteilungen und die äußere Form der Teilchen einstellen lässt. Wenn bestimmte Korngrößenverteilungen gewünscht werden, können auch entsprechende Siebfraktionen erstellt werden, die die einzelnen Teilchen mit der jeweiligen Korngrößenverteilung enthalten. Diese können dann in der gewünschten Korngrößenverteilung und Schüttdichte wieder gemischt werden. Häufig werden auch Siebfraktionen von Überkorn und Unterkorn abgetrennt. Ein weiteres Verfahren zur Herstellung von Zinkpulver wird in der WO 00/48260 A1 ausführlich beschrieben.

In bevorzugter Weise wird das erfindungsgemäße Zinkpulver oder Zinklegierungspulver in einer alkalischen Zellen verwendet. Derartige alkalische Zellen sind im Stand der Technik bekannt und werden beispielsweise in der WO 99/07030 beschrieben. Diese alkalischen Zellen besitzen üblicherweise eine Anode aus Zinkpulver oder Zinklegierungspulver und Kathoden aus Mangandioxid oder auch anderen Materialien wie Luft oder Silberoxid. Für die Anode wird das alkalische Zinklegierungspulver in einer Elektrolytflüssigkeit mit bekannten Geliermitteln oder anderen Zusätzen verfestigt, um das teilchenförmige Zink oder die teilchenförmige Zinklegierung zu stabilisieren und eine möglichst ideale Verteilung innerhalb der Elektrode zu erhalten.

Das erfindungsgemäße Zinkpulver oder Zinklegierungspulver besitzt einen sehr engen Korngrößenbereich und kann für Batterien in allen alkalischen Rundzellen und Knopfzellen eingesetzt werden. Es besitzt in bevorzugter Weise eine hohe Schüttdichte und einen für relativ feine Pulvertypen sehr geringen Feinanteil, was die Verbesserung der Gasungseigenschaften noch erheblich fördert. Weiterhin wird durch das erfindungsgemäße Zinkpulver oder Zinklegierungspulver erreicht, dass auch ohne den Zusatz von Blei, Cadmium und Quecksilber als Legierungselemente eine geringe Batteriegasung erzielt wird und somit ein Pulver geschaffen wird, das universell in allen alkalischen Batterietypen einsetzbar ist.

Die nachfolgenden Beispiele sollen die Erfindung näher erläutern:

### Beispiele

Es wurden Zinkpulver mit verschiedenen Legierungsbestandteilen hergestellt. Es wurden Batterieversuche mit LR14 (C)-Zellen durchgeführt.. Die Zellen zeigten in allen Fällen hervorragende Batterieeigenschaften im Vergleich zu Standardzinkpulvern und die Batteriegasung war in allen Fällen deutlich geringer Die Gasung wurde ermittelt nach einer An-Entladung von 40 bis 270 min bei 2 Ohm und anschließender Lagerung der Batterien von 7 Tagen bei 70 °C. Die Gasung lag hierbei in allen Fällen bei Werten von unter 4 ml Gas/Zelle. Besonders auffällig sind die sehr niedrigen Gasungswerte bei der 40 Minuten Entladung, die ebenfalls unter 4 ml pro Zelle lagen. Im Gegensatz zum Standardzinkpulver wurde hier eine Verbesserung um einen Faktor von bis zu 20 erreicht.

Ferner wurde eine Standard Gasung (Out of cell gas Test) durchgeführt. Hierbei werden 25 g Zinkpulver in einem Glaskolben mit 135 ml 36%-iger KOH und 4 % ZnO angesetzt. Die Wasserstoffentwicklung wird nach 5 Tagen bei 70°C ermittelt. Hier lagen die Gasungswerte des erfindungsgemäßen Zinkpulvers im Bereich des Standardzinkpulvers, aber deutlich niedriger als bei dem feinen Standardzinkpulver.

Die Fließrate wurde nach ASTM B213 ( 50 g 1/10" No.1-2288) gemessen und lag erwartungsgemäß aufgrund der hohen Schüttdichte bei sehr geringen Zeiten.

Die nachfolgende Tabelle 1 zeigt die Eigenschaften der erfindungsgemäßen Zinklegierungspulver im Vergleich mit den Eigenschaften von feinem Standardzinklegierungspulver in Tabelle 2 und den Eigenschaften von normalem Standardzinklegierungspulver in Tabelle 3.

**Tabelle 1**

| **Legierung ppm** | **< 40 µm** | **40 - 71 µm** | **71-100 µm** | **100-140 µm** | **> 140 µm** | **Schüttdichte g/cm3** | **Fließrate sec.** | **LR 14 Gasung ml 270 min** | **LR 14 Gasung ml 40 min** | **Standard 5 Tage 70°C ml** |
|---|---|---|---|---|---|---|---|---|---|---|
| **200In/200Bi** **(Typ 1)** | 9 | 40 | 24 | 22 | 5 | 3,58 | 25,7 | 4,0 | 2,1 | 1,7 |
| **200In/200Bi** **(Typ2)** | **4** | 36 | 39 | 16 | 5 | 3,53 | 26,3 | 3,7 | 1,9 | 1,4 |
| **300In/500Pb** **(Typ 1)** | **4** | 30 | 29 | 34 | 4 | 3,3 | 29,0 | 3,4 | 2,1 | 3,5 |
| **300In/500Pb** **(Typ 2)** | 4 | 17 | 26 | 37 | 16 | 3,7 | 23,8 | 3,4 | 3,3 | 3,6 |
| **500In/500Bi /500Pb (Typ 1)** | 4 | 24 | 32 | 30 | 10 | 3,5 | 24,4 | 3,0 | 3,0 | 1,5 |
| **500In/500Bi /500Pb (Typ 2)** | 4 | 28 | 32 | 27 | 9 | 3,5 | 26,8 | 1,2 | 2,1 | 1,9 |
| **500In/500Bi /500Pb (Typ 3)** | 6 | 49 | 33 | 10 | 2 | 3,6 | 20,2 | 2,0 | 2,4 | 1,3 |
| **500In/500Bi /500Pb (Typ 4)** | 4 | 39 | 36 | 18 | 3 | 3,8 | 19,6 | 2,0 | 2,2 | 1,1 |
| **500Pb** | 3 | 34 | 29 | 29 | 5 | 3,5 | 26,0 | 2,2 | 1,6 | 1,4 |

**Tabelle 2**

| **Standard feines Pulver Legierung ppm** | **< 40 µm** | **40 - 71 µm** | **71-100 µm** | **100-140 µm** | **> 140 µm** | **Schüttdichte g/cm3** | **Fließrate sec.** | **LR 14 Gasung ml 270 min** | **LR 14 Gasung ml 40 min** | **Standard 5 Tage 70°C ml** |
|---|---|---|---|---|---|---|---|---|---|---|
| **300In/300Bi** | 20 | 36 | 31 | 13 | 0 | 2,8 | 34,7 | 4,1 | 10,1 | 24,6 |
| **500In/500Bi /500Pb** | 25 | 67 | 8 | 0 | 0 | 2,7 | 33 | 5,4 | 8,8 | 17,5 |

**Tabelle 3**

| **Standardzinkpulver Legierung ppm** | **< 75 µm** | **75-150 µm** | **150- 250 µm** | **250-400 µm** | **> 400 µm** | **Schüttdichte g/cm3** | **Fließrate sec.** | **LR 14 Gasung ml 270 min** | **LR 14 Gasung ml 40 min** | **Standard 5 Tage 70°C ml** |
|---|---|---|---|---|---|---|---|---|---|---|
| **300In/300Bi** | 15 | 37 | 34 | 14 | 0 | 2,8 | 44,3 | 8,1 | 20,3 | 1,2 |
| **500In/500Bi /500Pb** | 6 | 30 | 37 | 26 | 1 | 2,8 | 53,2 | 5,2 | 17,2 | 0,7 |

## Patentansprüche

1. Zinkpulver oder Zinklegierungspulver für alkalische Batterien, das eine Korngrößenverteilung aufweist, bei der 60 bis 100 Gew.-% der Teilchen bezogen auf das Zinkpulver oder Zinklegierungspulver einen Durchmesser von 40 bis 140 µm besitzen.

2. Zinkpulver oder Zinklegierungspulver nach Anspruch 1 **dadurch gekennzeichnet, dass** es eine Korngrößenverteilung aufweist, bei der 75 bis 95 Gew.-% der Teilchen einen Durchmesser von 40 bis 140 µm besitzen.

3. Zinkpulver oder Zinklegierungspulver nach Anspruch 1 oder 2, **dadurch gekennzeichnet, dass** die Schüttdichte in einem Bereich von 2,9 bis 4,5 g/cm³ liegt.

4. Zinkpulver oder Zinklegierungspulver nach Anspruch 3, **dadurch gekennzeichnet, dass** die Schüttdichte in einem Bereich von 3,2 bis 4,0 g/cm³ liegt.

5. Zinkpulver oder Zinklegierungspulver nach einem oder mehreren der Ansprüche 1 bis 4, **dadurch gekennzeichnet, dass** der Anteil von Teilchen mit einem Durchmesser < 40 µm unter 10 Gew.-% bezogen auf das Zinkpulver oder Zinklegierungspulver beträgt.

6. Zinkpulver oder Zinklegierungspulver nach Anspruch 5, **dadurch gekennzeichnet, dass** der Anteil von Teilchen mit einem Durchmesser < 40 µm unter 5 Gew.-% bezogen auf das Zinkpulver oder Zinklegierungspulver beträgt.

7. Zinkpulver oder Zinklegierungspulver nach einem oder mehreren der Ansprüche 1 bis 6, **dadurch gekennzeichnet, dass** der Anteil von Teilchen eines Durchmessers bis 100 µm, vorzugsweise < 71 µm, eine kugelförmige Partikelform aufweist.

8. Zinkpulver oder Zinklegierungspulver nach einem oder mehreren der Ansprüche 1 bis 7, **dadurch gekennzeichnet, dass** als Legierungselemente Metalle ausgewählt aus der Gruppe Indium, Bismut, Blei, Aluminium, Calcium, Lithium, Natrium, Magnesium oder Gemische derselben enthalten sind.

9. Zinkpulver oder Zinklegierungspulver nach Anspruch 8, **dadurch gekennzeichnet, dass** ein oder mehrere Legierungselemente ausgewählt aus der nachfolgenden Gruppe von Metallen in folgenden Mengen enthalten sein können: 0,1 bis 1200 ppm Indium, 0,1 bis 1000 ppm Bismut, 0,1 bis 1000 ppm Blei, 0,1 bis 200 ppm Aluminium, 0,1 bis 200 ppm Calcium, 0,1 bis 200 ppm Lithium, 0,1 bis 200 ppm Natrium, 0,1 bis 200 ppm Magnesium.

10. Zinkpulver oder Zinklegierungspulver nach Anspruch 8, **dadurch gekennzeichnet, dass** es 0,1 bis 1200 ppm Indium und 0,1 bis 1000 ppm Bismut enthält.

11. Zinkpulver oder Zinklegierungspulver nach Anspruch 8, **dadurch gekennzeichnet, dass** es 0,1 bis 1200 ppm Indium, 0,1 bis 1000 ppm Bismut und 0,1 bis 1000 ppm Blei enthält.

12. Zinkpulver oder Zinklegierungspulver nach Anspruch 8, **dadurch gekennzeichnet, dass** es 0,1 bis 1000 ppm Blei und 0,1 bis 1000 ppm Indium enthält.

13. Zinkpulver oder Zinklegierungspulver nach Anspruch 8, **dadurch gekennzeichnet, dass** es 0,1 bis 1000 ppm Blei enthält.

14. Zinkpulver oder Zinklegierungspulver nach Anspruch 8, **dadurch gekennzeichnet, dass** 0,1 bis 1000 ppm Indium, 0,1 bis 1000 ppm Bismut und 0,1 bis 200 ppm Aluminium enthält.

15. Zinkpulver nach einem oder mehreren der Ansprüche 10 bis 14, **dadurch gekennzeichnet, dass** es zusätzlich 0,1 bis 200 ppm Lithium und/oder 0,1 bis 200 ppm Natrium enthält.

16. Zinkpulver oder Zinklegierungspulver nach einem oder mehreren der Ansprüche 1 bis 15, **dadurch gekennzeichnet, dass** das Zinkpulver ein amalgamiertes Zinkpulver ist.

17. Zinkpulver oder Zinklegierungspulver nach Anspruch 16, **dadurch gekennzeichnet, dass** das Zinkpulver mit 0,1 bis 7 Gew.-% Hg amalgamiert ist.

18. Zinkpulver oder Zinklegierungspulver nach einem oder mehreren der Ansprüche 1 bis 17, **dadurch gekennzeichnet, dass** das ≥ 5 Gew.-% Zinkpulver in Kombination mit herkömmlichen Zinkpulvern oder Zinklegierungspulvern des Standes der Technik eingesetzt werden.

19. Alkalische Batterie enthaltend als Anode das Zinkpulver gemäß Ansprüchen 1 bis 18.
